# EUROPEAN PATENT APPLICATION

(11) **EP 2 431 230 A1**
(43) Date of publication of application: **21.03.2012**
(21) Application number: 11181980.1
(22) Date of filing: 20.09.2011
(51) Int. Cl.: B60R 11/02

(54) **Flexible mounting device**

(30) Priority: 21.09.2010 GB 1015750
(71) Applicant: Nissan Motor Manufacturing (UK) Ltd., Cranfield Bedfordshire MK43 0DB (GB)
(72) Inventor: Laishley, Robert Anthony, Cranfield, Bedfordshire MK430DB (GB); Candler, Richard, Cranfield, Bedfordshire MK430DB (GB); Macintosh, Shaun, Sunderland, Tyne and Wear SR5 2TA (GB)

(57) **Abstract**

Support means 100 comprises device cradle 200 configured to secure and present a specific personal electronic device (500, Fig. 9) and a base module 300 configured to be integrated with a predetermined interior component of a vehicle. A releasable coupling (which may "hook and rotate" to engage) comprising a tongue (220, Fig. 2) on the device cradle and a lip (380, Fig. 4) and depression (390, Fig. 4) on the base module allows the device cradle to be used with an alternative base module or vice versa. The vehicle interior component may be a fascia, storage compartment, console, or cupholder. Device 500 may be a mobile phone, navigation device, MP3 player, data storage device, or a combination of these devices. The electronic connectors may comprise data carriers and/or charging current connections. A device screen and control buttons may be arranged to be visible to the user.

## Description

The present invention relates to a mounting for a personal electronic device in a vehicle; and particularly to such a mounting which is adaptable for use in different vehicles or with different devices.

Owners of personal electronic devices may carry them in a variety of vehicles and may upgrade to the latest model of personal electronic device frequently. At each upgrade, it may be necessary to buy, for example, a new case and a new charger, and to download updated software onto home and business PC's. Anything which reduces the amount of effort and expense involved in upgrading personal electronic devices is likely to be welcomed by consumers.

Various mountings have been proposed to hold and display personal electronic devices in vehicles. However, in many cases, the mountings are constrained by their design to fit only a particular device and a particular vehicle, so that the whole mounting has to be replaced if a new device or vehicle is bought. Such mountings are also inconvenient when a user wants to carry a particular electronic device in a variety of vehicles.

Some device mountings are attached to a vehicle by fasteners, such as screws. However, vehicle owners are understandably reluctant to drill holes in their vehicles in order to mount accessories, not least because this process tends to reduce the vehicle's secondhand value. It is therefore preferable to use mountings which are already provided in the vehicle. Furthermore, accessory mountings which use screws to fasten the mounting to the vehicle may work loose with use, requiring maintenance to retain their usability and stability. A loose accessory mounting for a vehicle may damage the accessory, by allowing amplified vibration of the accessory as the vehicle is driven.

Finally, some prior art device mountings simply hold the device in a location where it can be reached, without displaying the device screen and control buttons where they may be viewed and/or operated. This limits the usability of the personal electronic device.

It is an object of the invention to avoid the problems described above. In the following description, it should be noted that the term "cradle" is intended to mean a support; the use of the term "cradle" should not be taken to imply that any electronic processing means is contained therein. The term "forward" should be taken to mean "facing towards a user of the device", while the term "rearward" should be taken to mean "facing away from a user of the device".

According to the present invention for which protection is sought, there is provided a support means for releasably securing a personal electronic device to a predetermined interior component of a vehicle, wherein said support means comprises a device cradle, configured to secure and present a specific personal electronic device within said vehicle; a base module, configured to co-operate or to integrate with said interior component; and a releasable coupling between said device cradle and said base module; wherein the coupling is arranged to permit the device cradle or the base module to be used with an alternative base module or device cradle configured to co-operate or to integrate with another vehicle interior component, or to secure and present another personal electronic device respectively.

In an example, the support means is arranged to display in use a screen and control buttons of the personal electronic device so that they can be viewed and/or operated by a user.

In an example, the support means is arranged in use so that the screen and control buttons are substantially perpendicular to a user's line of sight. This optimizes visibility and control operation ergonomics for the user.

In an example, the base module of the support means is arranged for fastener-free integration of the base module with the vehicle interior component.

In an example, the base module of the support means is arranged to be self-stabilizing with respect to the vehicle interior component.

In an example, the device cradle is configured to secure and present a personal electronic device comprising a mobile phone, personal digital assistant, navigation device, MP3 player, digital data storage device, or a combination of these functions in one device.

In an example, the predetermined interior component comprises: a fascia panel; instrument panel; or dashboard of a vehicle.

In an alternative example, the predetermined interior component comprises a storage compartment or console of a vehicle.

In an alternative example, the predetermined interior component comprises a cupholder.

In an example, the device cradle comprises a unitary moulding.

In an alternative example, the device cradle comprises a plurality of moulded parts.

In an example, the device cradle comprises a first electronic connector element configured to supply data and/or power to the personal electronic device.

In an example, the releasable coupling comprises a latching means.

In an example, the releasable coupling has a "hook and rotate" function.

In an example, the device cradle and the base module comprise co-operating location features.

In an example, the base module comprises first and second parts, where the first part supports the device cradle, and the second part integrates the base module with the predetermined vehicle interior component.

In an example, a lower region of the base module comprises a flange dependent from an upper region of the base module.

In an example, the base module lower region flange is substantially continuous.

In an example, at least part of the lower region of the base module is substantially frustro-conical in vertical section. Such a frustro-conical section helps to centre the base module in the vehicle interior component.

In an example, the lower region of the base module comprises a plurality of depending projections.

In an example, the depending projections comprise a single forward projection and two lateral projections.

In an example, the support means may be rotated to allow operation of the personal electronic device by more than one user.

In an example, the base module of the support means comprises feet arranged to avoid a suction lock condition with said predetermined interior component.

The invention will now be described by way of example, with reference to the accompanying drawings in which:
Figure 1 is a perspective view of a partly assembled support means according to the invention, as seen by a passenger in a right-hand-drive vehicle;
Figure 2 is a perspective view of the device cradle of the support means;
Figure 3 is a perspective view of the rear face of the device cradle;
Figures 4 to 6 are perspective views of a partly assembled base module of the support means;
Figure 7 is a rear perspective view of a fully assembled support means;
Figure 8 is a rear perspective view of an alternative fully assembled support means;
Figure 9 is a perspective view of the device cradle with a personal electronic device secured thereto; and Figure 10 is a rear perspective view of the device cradle with a personal electronic device mounted thereon.

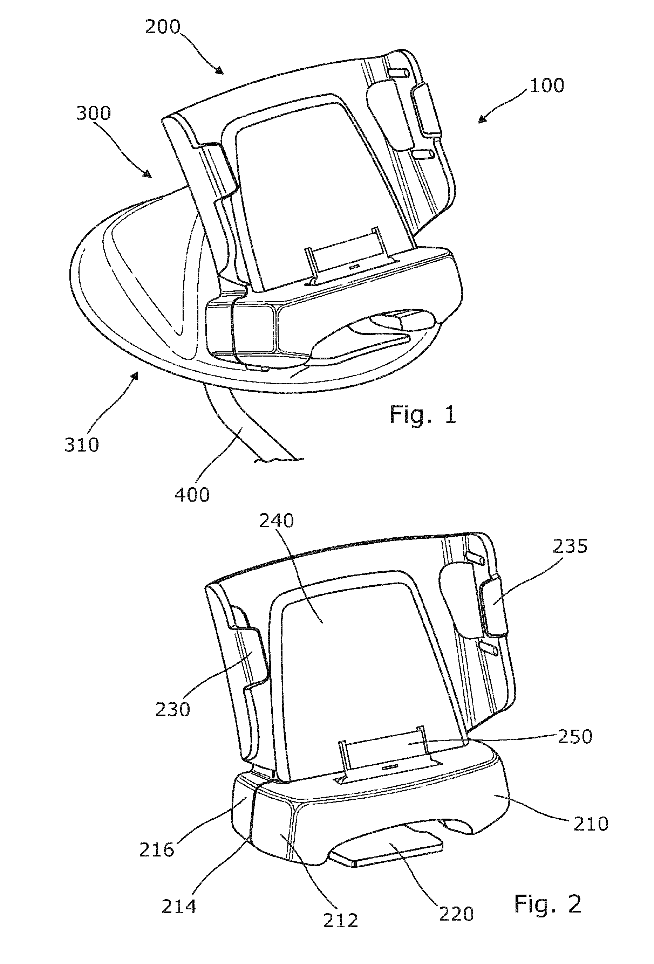

Figure 1 shows an example of a support means 100 according to the present invention. Support means 100 comprises a device cradle 200 and a base module 300, of which only a first part 310 is shown for clarity. A cable 400 is provided to facilitate electronic communication between the device and the vehicle. Cable 400 may also supply power to the personal electronic device from the vehicle.

Figure 2 shows the device cradle 200 in more detail. In the example shown, cradle lower portion 210 comprises a front part 212 and a rear part 216, with a split line 214 therebetween. Alternatively, the front and rear parts of the cradle may be moulded in one piece as a unitary component. A tongue 220 is provided, to form part of a latching means which will be described shortly. Wing features 230, 235 and wall 240 serve to locate the personal electronic device in use. A first electronic connector 250 is provided to supply power to the personal electronic device. Connector 250 may additionally provide a means by which the personal electronic device and the vehicle may communicate electronically.

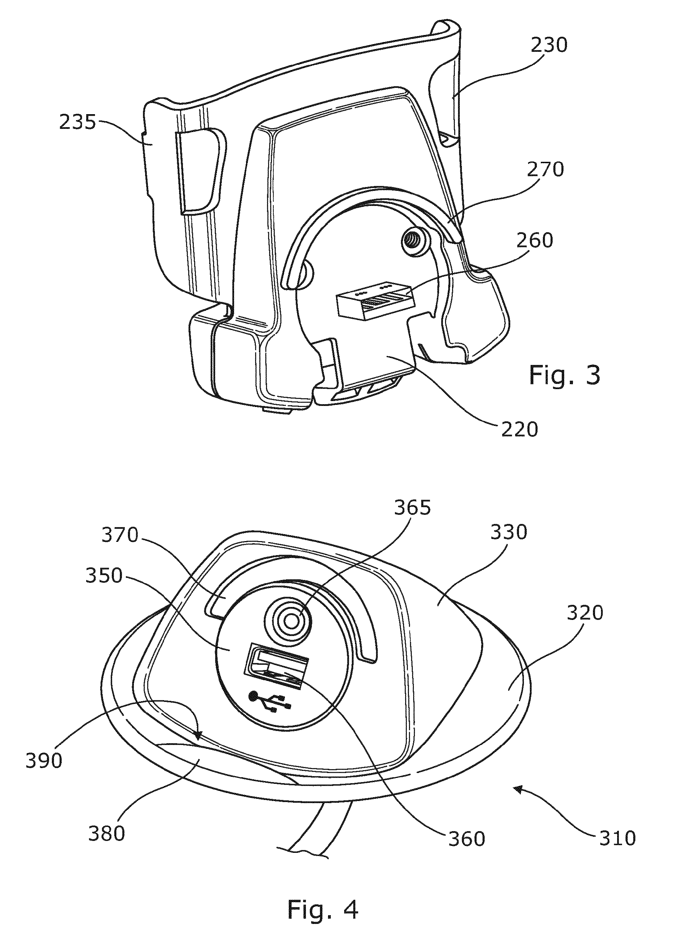

Figure 3 shows the rear face of the device cradle. A second electrical connector 260 is connected to the first connector 250 on the front of the cradle. In the example shown, an arcuate projection 270 is provided, for reasons which will be explained below.

Figure 4 shows the first part 310 of the base module 300 in more detail, with body 330 projecting upwards, and bosses 305 projecting downwards, from flange 320. A socket 350 comprises a third electrical connector 360 which may take the form of a USB port; and which connects second electrical connector 260 on device cradle 200 to cable 400. Socket 350 may also comprise a charging connector 365. Arcuate groove 370 is configured to co-operate with arcuate projection 270 on device cradle 200 to ensure that the device cradle is held upright on the base module. Finally, the upstanding lip 380 and depression 390 are arranged to co-operate with the tongue 220 on the device cradle 200 to ensure that the base module 300 and device cradle 200 fit together in close engagement. Such close engagement minimizes the risks of undesirable rattling noises and fretting damage in use. As the device cradle 200 is mounted onto the base module 300 in a sliding fashion, tongue 220 will deflect upwards, then snap down securely over lip 380 into a depression 390 located behind the lip 380. In order to dismount the device cradle 200 from the base module 300, tongue 220 can be manually deflected upwards by the user, allowing the device cradle 200 to be slid forward. These sliding motions for mounting and dismounting act in mutual cooperation with the sliding engagement and disengagement of electrical connectors 260 and 360, and of projection 270 with groove 370.

In practice, the user may find it easiest to engage projection 270 with groove 370 first, then press lower front part 212 back into the base module. This action is known as a "hook and rotate" engagement.

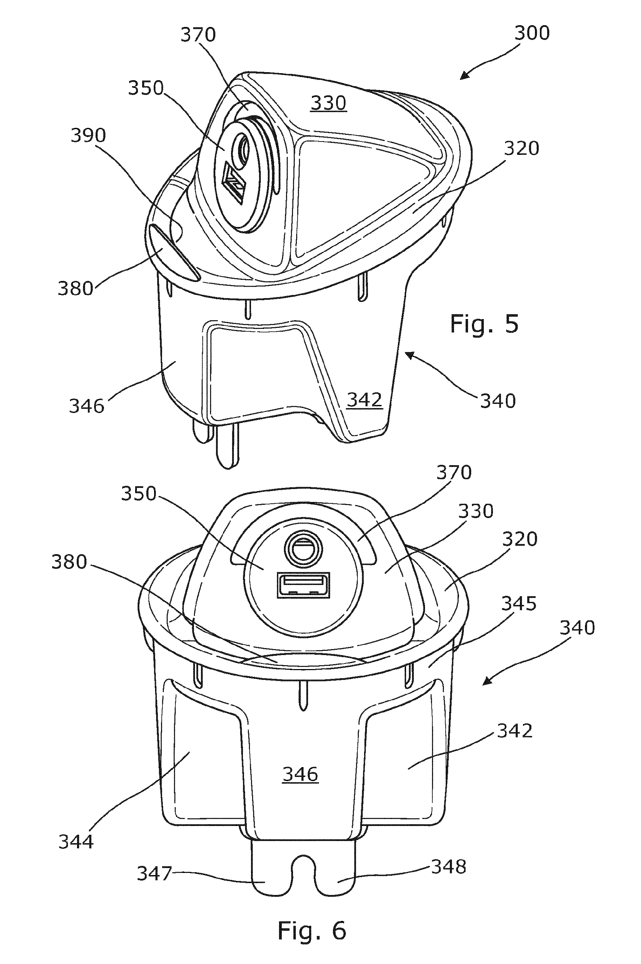

Figures 5 and 6 show an example of the assembled base module 300. Second part 340 is fitted to first part 310 by screws (not shown) locating in bosses 305. Second part 340 is a leg depending from base module 300 and comprises lateral locators 342 and 344, a forward locator 346, and feet 347 and 348. These locators serve to align the base module on the predetermined vehicle interior component (not shown), with feet 347 and 348 preventing "suction lock", which occurs when two plastic disc-shaped objects are put together and prevents one disc from being withdrawn from the other. A downwardly projecting flange 345 may also be provided on second part 340 to provide a further locating feature. This flange may be continuous in plan view, but may also have short gaps formed in its circumference to manage insertion and withdrawal forces. The flange may be frustro-conical in vertical section, or may have a curved vertical edge profile to manage insertion and withdrawal forces.

These location features, namely the flange 345 and leg 340, are designed to ensure that the base module is integrated with the vehicle interior component, with flange 320 lying flush with the surrounding dashboard or console, for example. The tapered outer edges of flange 345 are arranged to co-operate with a tapered or parallel-walled mouth on the vehicle interior component, ensuring that the base module is self-stabilizing in use, as opposed to prior art mountings which may become unstable as their fasteners work loose. The base module of the invention is arranged to be integrated with the vehicle interior component without the use of fasteners. Locators 342, 344, and 346 may be regarded as legs, and may be arranged in a letter T shape when seen in a plan view. This layout is effectively a tripod mounting. This layout has been be found to be advantageous in combining a firm location when the support means is installed, with ease of removal once the seal on the tapered flange is broken. It also allows for ease of routing cable 400. Tripod mountings are generally used as inherently stable mountings for optical and other scientific instruments, such as cameras, theodolites, and telescopes, which need to be mounted stably but movably.

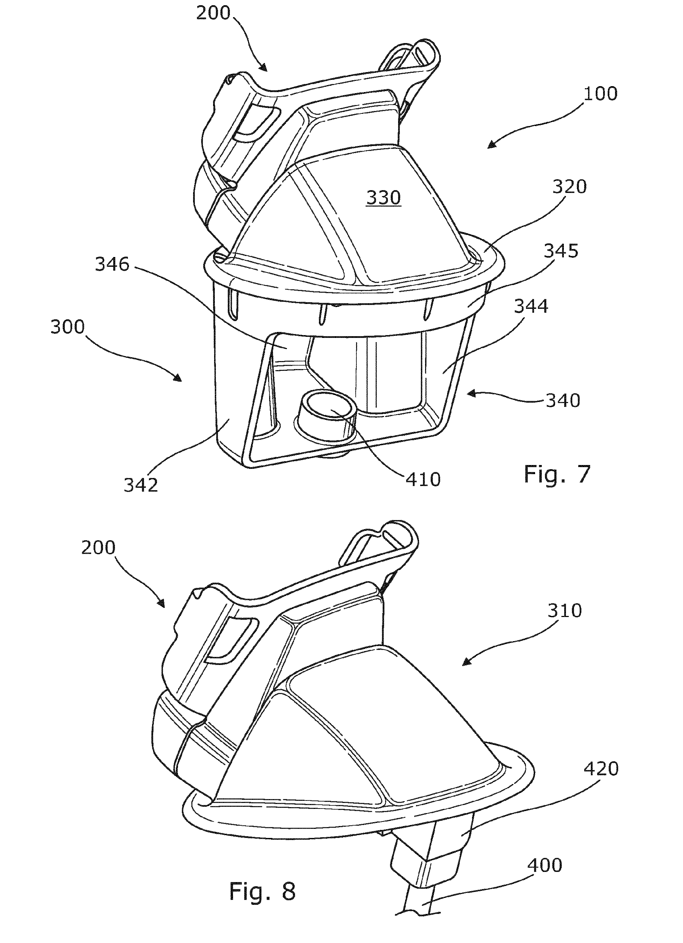

Figure 7 shows a rearwards view of the assembled support means 100. Numeral 410 denotes an aperture for routing of cable 400.

Figure 8 shows an alternative cable connection 420.

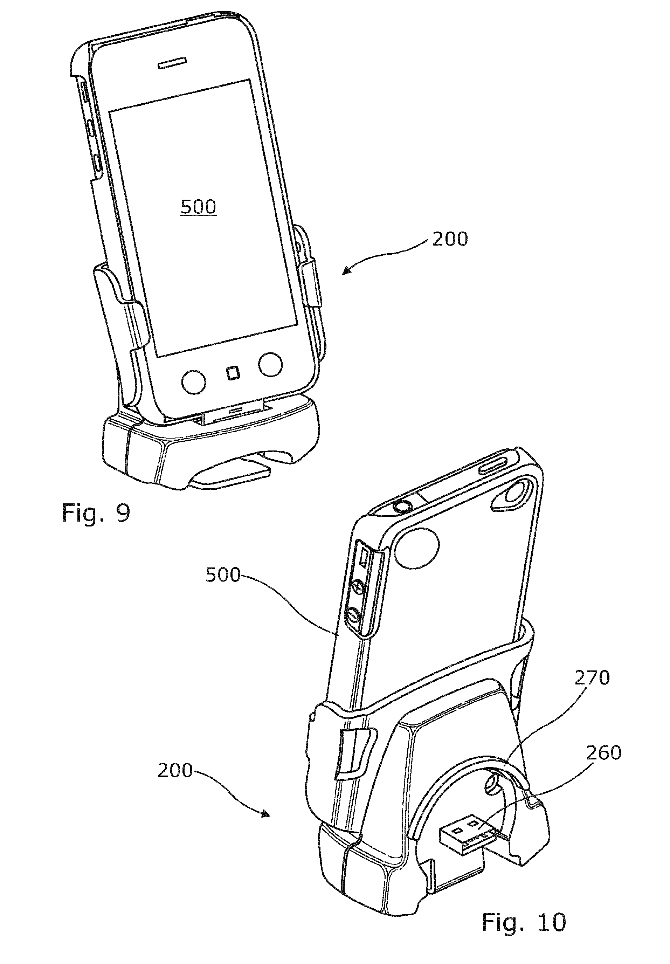

Figure 9 shows a typical personal electronic device 500 located on the device cradle 200. The cradle may be used as a static display device for the personal electronic device 500 when it is not in use in a vehicle. It will be noted

that the device 500 is shown having a screen and buttons, which by virtue of their location within the support means 100, are clearly visible to, and operable by, the user of the device. Device 500 may be released from support means 100 by lifting the device 500 upwards.

Finally, Figure 10 shows a rear view of the device cradle and device as shown in Figure 9.

It will be appreciated that the present invention is not to be considered to be limited to the precise construction disclosed. Various adaptations and modifications may be applied to the construction, within the limitations of the appended claims.

## Claims

1. A support means (100) for releasably securing a personal electronic device (500) to a predetermined interior component of a vehicle, wherein said support means (100) comprises:
a device cradle (200) configured to secure and present a specific personal electronic device (500) within said vehicle;
a base module (300) configured to integrate with said interior component;
and a releasable coupling between said device cradle (200) and said base module (300);
wherein the coupling is arranged to permit the device cradle (200) or
the base module (300) to be used with an alternative base module (300) or device cradle (200) configured to integrate with another vehicle interior component or to secure and present another personal electronic device (500) respectively.

2. A support means (100) according to claim 1, wherein the support means (100) is arranged in use to display a screen and control buttons of the personal electronic device (500) substantially perpendicular to a user's line of sight so that they can be viewed and/or operated by said user.

3. A support means (100) according to claim 1 or claim 2, wherein said base module (300) is arranged for fastener-free integration of said base module (300) with said vehicle interior component.

4. A support means (100) according to any preceding claim, wherein said base module (300) is arranged to be self-stabilizing with respect to said interior component.

5. A support means (100) according to any preceding claim, wherein said device cradle (200) is configured to secure and present a personal electronic device (500) comprising a mobile phone, personal digital assistant, navigation device, MP3 player, digital data storage device, or a combination of these functions in one device.

6. A support means (100) according to any preceding claim, wherein said predetermined interior component comprises: a fascia panel; instrument panel; or dashboard of a vehicle.

7. A support means (100) according to any one of claims 1 to 5, wherein said predetermined interior component comprises a storage compartment or cupholder or console of a vehicle.

8. A support means (100) according to any preceding claim, wherein said device cradle (200) comprises a first electronic connector element (250) configured to supply data and/or power to the personal electronic device (500).

9. A support means (100) according to any preceding claim, wherein said releasable coupling comprises a latching means (220) with a "hook and rotate" function.

10. A support means (100) according to any preceding claim, wherein said device cradle (200) and said base module (300) comprise co-operating location features (270, 370, 220, 380, 390).

11. A support means (100) according to any preceding claim, wherein said base module (300) comprises first (310) and second (340) parts, where the first part (310) supports the device cradle (200), and the second part (340) integrates the base module (300) with the predetermined vehicle interior component.

12. A support means (100) according to any preceding claim, wherein a lower part (345) of said base module (300) is frustro-conical in vertical section.

13. A support means (100) according to claim 11 or claim 12, wherein said base module second part (340) comprises a plurality of depending projections (342, 344, 346).

14. A support means (100) according to claim 13, wherein the depending projections comprise a single forward projection (346) and two lateral projections (342, 344).

15. A support means (100) according to any previous claim, wherein the base module (300) comprises feet (347, 348) arranged to avoid a suction lock condition with said predetermined interior component.
